# EUROPEAN PATENT APPLICATION

(11) **EP 2 500 830 A1**
(43) Date of publication of application: **19.09.2012**
(21) Application number: 09851496.1
(22) Date of filing: 19.11.2009
(51) Int. Cl.: G06F 17/00, G06F 17/30

(54) **FRAMEWORK FOR THE SEMI-AUTOMATIC CONSTRUCTION OF A TEST COLLECTION USED IN EXTRACTING RELATIONSHIPS BETWEEN TECHNICAL TERMS**

(30) Priority: 11.11.2009 KR 20090108695
(71) Applicant: Korea Institute Of Science And Technology Information, Yuseong-gu Daejeon-si 305-333 (KR)
(72) Inventor: JEONG, Chang Hoo, Daejeon-si 305-801 (KR); CHOI, Sung Pil, Daejeon-si 302-792 (KR); CHOI, Yun Soo, Daejeon-si 302-792 (KR); YOON, Hwa Mook, Daejeon-si 305-500 (KR); YOU, Beom Jong, Daejeon-si 305-301 (KR)
(74) Representative: Hodsdon, Stephen James
(86) International application number: PCT/KR2009/006828
(87) International publication number: WO 2011/062311

(57) **Abstract**

The present invention relates to a framework for the semi-automatic construction of test collections used in extracting relationships between technical terms, and provides a framework for the semi-automatic construction of test collections used in extracting relationships between technical terms, wherein a practical test collection is constructed by systematically processing technical terms present in texts and associative relationships between the same on the basis of a language resource, and by going beyond the existing approach for constructing small-scale test collections based on limited texts and objects and instead making effective use of a large-scale academic database, and of specialist dictionaries in various fields and up-to-date machine-learning algorithms. The present invention provides the advantages that efforts on the part of constructors can be minimised and variations in results which occur due to the dispositions of constructors can be reduced by automating tasks which are standardised and time-consuming.

## Description

### Technical Field

The present invention relates to a framework for semi-automatic construction of a test collection for extracting relationships between technical terms, and more particularly, to a framework for semi-automatic construction of a test collection for extracting relationships between technical terms, wherein descriptors, which describe relationships in sentences including pairs of terms, are systematically abstracted using language resources, in order to process associative relationships between technical terms belonging to a wide range of areas, and candidate associative relationships between technical terms are provided so that the constructor can finally select the most appropriate relationship from them.

### Background Art

Circulation of a vast amount of information in line with widespread use of the Internet is followed by various needs of information by constructors. This means that the current trends go beyond conventional information searching or information classification and require more sophisticated processing of information, such as summarization of information and extraction of core information. Such trends are spotlighting the importance of relationship extraction systems.

However, one of the most serious problems in connection with system development is the lack of indices for evaluating system performance.

In addition, most relationship extraction systems currently available rely on manual verification, which is based on sampling from results, for performance evaluation.

Objective comparison and evaluation of relationship extraction systems are only possible when a set of triples, which consist of technical terms deemed important in documents and associative relationships between them, is provided properly.

In other words, objective evaluation of reliability of relationship extraction systems requires a systematically constructed test collection, which usually consists of technical terms existing in documents, associative relationships between the technical terms, and a triple set that has undergone validity judgment.

Such a test collection plays a crucial role not only in the study of corresponding areas, but also for evaluation of performance of commercial systems and resulting selection of a suitable one. Therefore, the test collection is essential not only to development of related technologies, but finally to improvement of competitiveness in information circulation.

Therefore, development of most information systems necessarily involves a process of evaluating the systems using test collections constructed to be suited to the areas of application.

It is a very difficult job to manually set the associative relationship between technical terms appearing in texts. If the object of application is limited to a specific field, an expert in the corresponding field could identify technical terms or set associative relationships.

However, this approach is also very demanding because it requires detailed setting criteria (predefined associative relationship set, relationship setting methods, judgment criteria, etc.), verbal judgment ability of the expert in the field, etc.

### Disclosure

### Technical Problem

Therefore, the present invention has been made in view of the above-mentioned problems, and an aspect of the present invention is to provide a framework for semi-automatic construction of a test collection for extracting relationships between technical terms, wherein technical terms existing in documents and associative relationships between the technical terms are systematically processed based on language resources so that, beyond the conventional approaches of constructing a small-scale test collection based on limited documents and objects, a practical test collection is constructed using a large-scale academic database, a wide range of specialized terms dictionaries, and a latest machine-learning algorithm.

### Technical solution

In accordance with an aspect of the present invention, there is provided a framework for semi-automatic construction of a test collection for extracting relationships between technical terms, including an automatic processor unit adapted to systematically process syntactic and semantic characteristics of documents and generate triples comprising pairs of specialized terms and a group of relevant associative relationship candidates; a manual processor unit adapted to provide a constructor terminal with a group of candidate triples generated by the automatic processor unit and enable reception of a triple finally selected from the provided candidate triples by a constructor through the constructor terminal; a test collection construction unit adapted to receive a triple selected from triples, which are generated by the automatic processor unit, by the manual processor unit, construct a test collection, and store the constructed test collection in a database unit; and a central processing unit adapted to control organic operations of the automatic processor unit, the manual processor unit, and the test collection construction unit.

### Advantageous Effects

The relationship extraction system or framework according to the present invention, as described above, is advantageous in that automation of stereotyped, time-consuming jobs minimizes efforts of the constructor and reduces the deviation of results that would otherwise occur depending on the constructor's preferences.

Furthermore, the relationship extraction system according to the present invention is advantageous in that, besides the process of processing resources, the resources themselves also have excellent quality, and a high-quality test collection is extracted using a systematically organized document processing process and good-quality base data, thereby generating results of quality.

### Brief Description of the Drawings

FIG. 1 is a block diagram of a framework for semi-automatic construction of a test collection for extracting relationships between technical terms according to the present invention;
FIG. 2 is a screen capture when a user terminal is provided with sentences, which include technical terms, in a framework for semi-automatic construction of a test collection for extracting relationships between technical terms according to the present invention; and
FIG. 3 is a screen capture when a constructor terminal is provided with the constructor's selections in a framework for semi-automatic construction of a test collection for extracting relationships between technical terms according to the present invention.

### Best Mode for Carrying Out the Invention

Interpretation of terms or words used in this specification and claims is not limited to their conventional meanings or those defined in dictionaries, but they are to be interpreted as having meanings and concepts conforming to the technical idea of the present invention, based on the principle that the inventor can properly define the concept of terms in a way that best describe the invention.

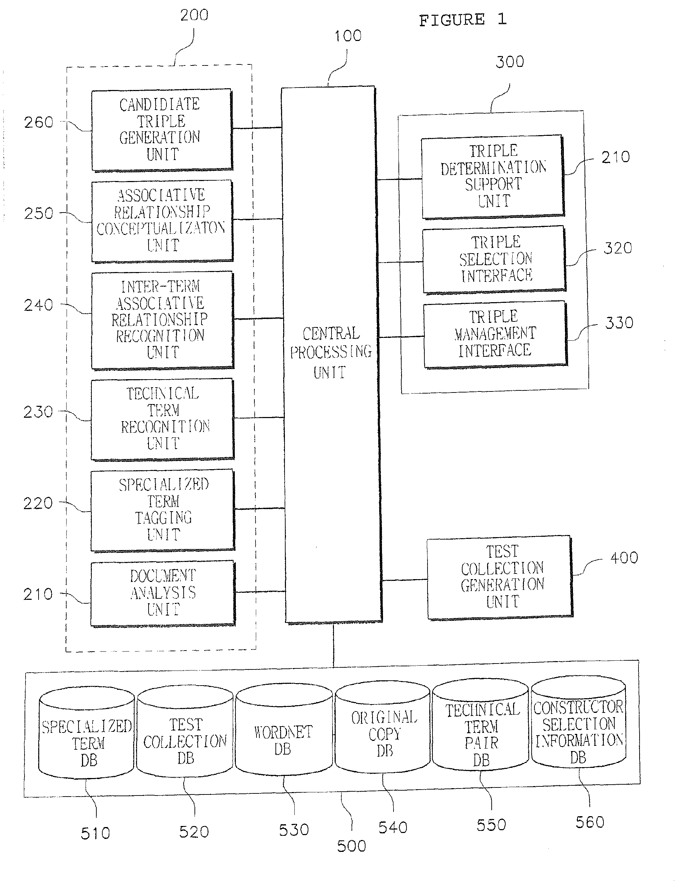

A framework for semi-automatic construction of a test collection for extracting relationships between technical terms according to the present invention will now be described in detail with reference to FIGs. 1-3.

FIG. 1 is a block diagram of a framework for semi-automatic construction of a test collection for extracting relationships between technical terms according to the present invention.

As shown in FIG. 1, the framework for semi-automatic construction of a test collection for extracting relationships between technical terms according to the present invention includes a central processing unit 100, an automatic processor unit 200, a manual processor unit 300, a test collection generation unit 400, and a database unit 500.

The automatic processor unit 200 systematically processes syntactic and semantic characteristics of documents and generates candidate triples. The manual processor unit 300 enables the constructor to finally select the most suitable triple from the candidate triples generated by the automatic processor unit 200.

A test collection, which is generated through processing by the automatic and manual processor units 200 and 300, includes triple and associative relationship's semantic information, information regarding the context in which triples appear (sentences from which triples are extracted), information regarding the area of triples, etc.

The automatic processor unit 200, which systematically processes syntactic and semantic characteristics of documents and generates candidate triples as described above, includes a document analysis unit 210, a specialized term tagging unit 220, a technical term recognition unit 230, an inter-term associative relationship recognition unit 240, an associative relationship conceptualization unit 250, and a candidate triple generation unit 260.

The manual processor unit 300 enables exchange of information between the framework for semi-automatic construction of a test collection for extracting relationships and the constructor terminal so that the constructor terminal is provided with candidate triples generated by the automatic processor unit 200, and a triple selected by the constructor from the given candidate triples is received.

The document analysis unit 210 analyzes an original copy database, specifically it performs syntactic analysis of documents, lexical category tagging, phrase chunking, etc. During this process, the document analysis unit 210 employs various special rules or algorithms in order to solve the problem of lexical alternation and process compound words.

As used herein, the lexical category tagging is one of basic processing of natural languages, and refers to a method of assigning recognition marks (referred to as tags) to natural languages so that computers can understand them.

The tag, used herein in a sense extended from its tangible meaning (e.g. price tag of a bag or clothes), refers to information regarding the lexical category of each word, in the context of language processing.

An exemplary sentence is tagged in the following:
*I. naneun haggyoe ganda.*
II. *na*/*npp+neun*/jx *haggyo*/nc+*e*/jca *ga*/pv+*nda*/ef ./s.

In the above example, npp, jx, nc, jca, pv, ef, and s are tags indicating lexical categories, and a set of these symbols is referred to as a tag set.

The specialized term tagging unit 220 is adapted to recognize specialized terms existing in documents using a specialized term dictionary, which consists of 253,603 cases in 16 areas, stored in the specialized term DB 710 of the database unit 500.

The technical term recognition unit 230 is adapted to recognize technical terms, which have significant meanings in documents, extract them, and refine them. The technical term recognition unit 230 employs various machine-learning algorithms to recognize technical terms.

The inter-technical term associative relationship recognition unit 240 is adapted to grasp associative relationships between recognized technical terms. Specifically, it recognizes the relationship between a pair of terms based on the syntactical pattern of the sentence and, when the pair of terms are regarded as being capable of having an associative relationship after pattern analysis, extracts a descriptor that describes the associative relationship.

The associative relationship conceptualization unit 250 abstracts concepts of acquired descriptors, based on a semantic network such as a WordNet DB 530 of the database unit 500, and semantically clusters them so that, through semantic extension, various candidate associative relationships are generated.

Specifically, the associative relationship conceptualization unit 250 abstracts descriptors, which may have various meanings, into meanings of the highest level using a semantic network, respectively, and utilizes the corresponding meanings as associative relationships between technical terms.

For reference, the WordNet DB 530 groups words into sets of synonyms, provides short, general definitions, and records the various semantic relations between these synonym sets, thereby producing a combination of a dictionary and a thesaurus that is more intuitively usable, and supporting automatic text analysis and artificial intelligence applications.

The candidate triple generation unit 260 generates candidate triples using technical terms and various abstracted associative relationships, and the candidate triples are determined depending on the type of associative relationships.

The manual processor unit 300, which enables the constructor to finally select the most suitable triple from the candidate triples generated by the automatic processor unit 200, includes a triple determination support tool 310, a triple selection interface 320, and a triple management interface 330.

The constructor selection interface 320 and the constructor management interface 330 of the manual processor unit 300 are physical virtual media built for temporary or permanent access enabling communication between the manual processor unit 300 and the constructor (or constructor terminal).

Specifically, the constructor selection interface 320 and the constructor management interface 330 serve as input/output paths for input signals, which are used by the constructor to operate the system, and output signals, which are used to provide the constructor with the result of the system's response thereto.

The triple determination support tool 310 provides associative relationship's semantic information, context information, etc., for reference, to support the constructor's final triple determination based on decision of validity of the candidate triple set through the constructor selection interface 320 and the constructor management interface 330.

In order to guarantee the quality of a test collection constructed using the framework for semi-automatic construction of a test collection for extracting relationships between technical terms, the specialized term DB 510 of the database unit 500 needs to satisfy the following three conditions:

Firstly, a large database is necessary as the base data. This is because, in order to increase the rate of reappearance of terms existing in documents and relationship extractions and to minimize fluctuation of the result, a large amount of data needs to be used for document analysis.

Next, a specialized term dictionary encompassing various areas is needed. This is because, in order to recognize various terms existing in documents, area information needs to be diversified.

Finally, a standardized process capable of inducing objective validity determination needs to be built.

This is because, if each constructor generates a heavily deviated result, the reliability of the framework is degraded.

The framework for semi-automatic construction of a test collection for extracting relationships between technical terms according to the present invention, in order to satisfy the above-mentioned three prerequisites, firstly stores/manages overseas academic data of at least thirty million cases in science/technology areas.

Secondly, the framework for semi-automatic construction of a test collection for extracting relationships between technical terms according to the present invention employs a specialized term dictionary encompassing 253,603 cases in 16 areas. More specifically, it includes specialized term dictionary data regarding architectural engineering (2,653), metallurgy (1,233), mechanical engineering (56,880), physics (11,901), industrial engineering (755), biology (73,562), mathematics (5,519), medical science (181,825), electric/electronic engineering (1,243), computer science (3,157), earth science (7,338), geography (5,916), civil engineering (655), chemistry (19,436), chemical engineering (451), and environmental engineering (936).

Thirdly, the framework for semi-automatic construction of a test collection for extracting relationships between technical terms according to the present invention systematically processes various types of language processing, syntactical analysis, and machine learning to efficiently generate a set of candidate triples including technical terms and associative relationships.

At the same time, the framework for semi-automatic construction of a test collection for extracting relationships between technical terms according to the present invention provides additional information, such as information regarding the context from which triples are extracted, information regarding the semantics of associative relationships, and sample sentences conforming to the semantics, so that the constructor can determine the associative relationship in an easier and clearer manner.

A method for constructing a test collection by a framework for semi-automatic construction of a test collection for extracting relationships between technical terms, which is constructed as described above, will now be described in detail.

Firstly, the automatic processor unit 200 extracts pairs of technical terms, which have association with each other, from documents stored in the original copy DB 540 and extracts a set of candidate associative relationships between the extracted technical terms. A specific example is given in following Table 1:

**Table 1**

| Technical terms | Candidate associative relationships | Technical terms |
|---|---|---|
| interstitial_lung_disease | 1.(keep, maintain, hold) | tropical_pulmona ry_eosinophilia |
| | 2.(persist, remain, stay) | |
| | 3.(be) | |
| inner_limiting_membranes | 1.(think, cogitate, cerebrate) | atomic_force_microscopy |
| | 2.(act, move) | |
| | 3.(examine, see) | |
| | 4.(analyze, study, examine) | |
| innate_immune_responses | 1.(make, create) | pattern_recognit ion_receptors |
| | 2.(act, move) | |
| | 3.(trigger) | |
| inhaled_nitric_oxide | 1.(change, alter, modify) | pulmonary_vascular_resistance |
| | 2.(oppress, suppress, crush) | |
| | 3.(inhibit, bottle_up, suppress) | |
| | 4.(make, create) | |
| | 5.(appoint, charge) | |
| | 6.(have, have_got, hold) | |
| | 7.(move, displace) | |

It is clear from Table 1 that each pair of technical terms is assigned a plurality of associative relationships.

Therefore, the test collection construction process can be defined as a task of designating the most suitable relationship among the candidate associative relationships.

In order to analyze the relationship between two technical terms more closely, the constructor refers to sentences, which include technical terms, through the manual processor unit 300.

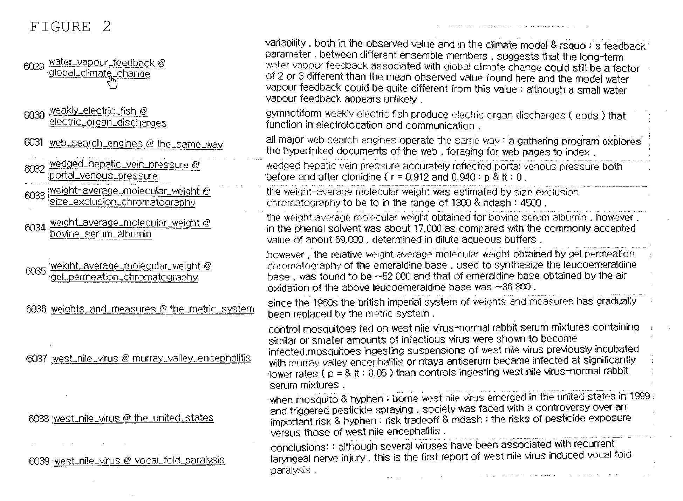

According to the present invention, construction of a test collection is directed to a set of terms consisting of at least three words exhibiting a relatively high degree of specialty as technical terms. There are a total of 6.144 pairs of technical terms consisting of at least three words, and each pair is assigned a term-tagged reference sentence, as shown in FIG. 2.

The pairs of technical terms consisting of at least three words are stored in the technical term pair DB 550, extracted by the central processing unit 100, and provided to the constructor terminal through the manual processor unit 300.

As described above with reference to Table 1, a triple consists of a pair of specialized terms and a group of relevant associative relationship candidates.

Table 2 below defines a task of analyzing technical terms and extracting associative relationships from pairs of specialized terms and a group of relevant associative relationship candidates, in order to construct a test collection.

**Table 2**

| Relationship distinction | Content |
|---|---|
| Relationship setting impossible | - Two specialized terms cannot constitute S+V+O form. |
| | - Lack specialty of specialized terms. |
| Relationship not found | - Two specialized terms constitute S+V+O form, but candidate associative relationship is improper. |
| Relationship extraction successful | - Two specialized terms have S+V+O form, and candidate associative relationship is proper. |
| | - Distinction of "passive", "active" regarding associative relationship. |
| | - Distinction of "affirmative", "negative" regarding associative relationship. |

As summarized in Table 2 above, the inter-term associative relationship recognition unit 240 recognizes three types of relationships between a pair of specialized terms: 'relationship setting impossible', 'relationship not found', and 'relationship extraction successful'.

The case of 'relationship setting impossible' includes two cases: when the two specialized terms do not constitute "S+V+O" form (Example 1), and when at least one of the two specialized terms is not determined to be a specialized term (Example 2).

| |
|---|
| (Example 1) between may 1988 and november 1996, 28 patients with **cervical spinal cord injury** *underwent* **lower urinary tract** reconstruction. |
| (Example 2) the **capillary filtration coefficient** *showed* **no significant change** over time, but decreased by 5-10% following the albumin infusion. |

In (Example 1), the two sets of words extracted as specialized terms 'cevical spinal cord injury' and 'lower urinary tract' are not related with the associative relationship positioned between the two terms, 'underwent', and underwent(V) is considered as having an associative relationship with patients(S) and lower urinary tract(O). Therefore, this case is deemed 'relationship setting impossible'.

In (Example 2), the two specialized terms constitute S+V+O, but the second set of words extracted as a specialized term, 'no significant change', is considered lacking specialty. Therefore, this case is deemed 'relationship setting impossible'.

The case of 'relationship not found' occurs when the two specialized terms and the associative relationship constitute S+V+O form, but no proper associative relationship is found among the candidate associative relationships, as in the case of (Example 3) below.

The associative relationship corresponding to this case needs redefinition later, but is assumed unclassified at the current stage.

| |
|---|
| (Example 3) **body mass index** *was positively associated with* **systolic blood pressure** in both groups. |
| Group of candidate associative relationships: |
| 1. act, move 2. think, cognitive, cerebrate 3. join, fall_in, get_together |

The case of 'relationship extraction successful' occurs when the two specialized terms and the associative relationship constitute S+V+O form, and when a suitable associative relationship can be assigned from the candidate associative relationships. This case is concurrent with determination whether the relationship between the two terms is 'active' or 'passive' and whether it is 'affirmative' or 'negative'.

Determination whether 'active' or 'passive' is made by combining the associative relationship and the position of the two specialized terms.

The following (Example 4) gives a sentence regarding two specialized terms 'central nervous system' and 'the immune system'. Associative relationship 'affect' is extracted from the sentence and is used in the 'active' voice in the sentence. However, since the position of the specialized terms is reversed, the associative relationship is deemed 'passive'.

| |
|---|
| (Example 4) evidence is presented that **the immune system** *can affect* **central nervous system** functioning, leading to changes in learning. |

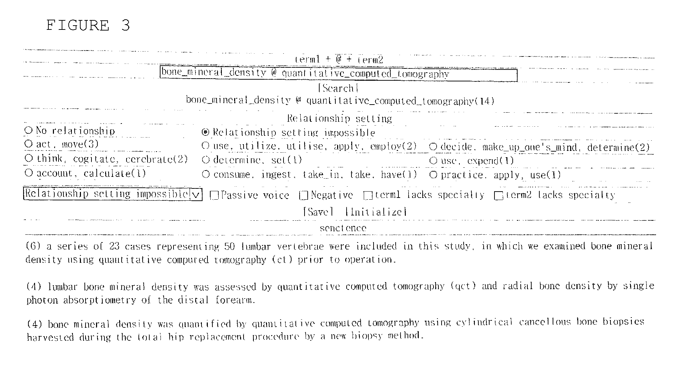

FIG. 3 illustrates the screen when two specialized terms 'bone mineral density' and 'quantitative computed tomography' are entered and searched by the constructor on a web page for constructing a test collection.

The central processing unit 100 provides the display unit of the constructor terminal, via the manual processor unit 300, with sentences including the two specialized terms entered. The constructor then reviews the sentences including the specialized terms and determines firstly whether relationship extraction is possible or not.

The central processing unit 100 also provides a window for searching Korean equivalents of specialized terms, through the display unit of the constructor terminal, so that the constructor can easily understand the meaning of specialized terms when deciding relationships.

Specifically, when the link 'bone_mineral_density' @ 'quantitative_computed_tomography' near the top is clicked, as shown in FIG. 3, the central processing unit 100 extracts Korean equivalents of the two specialized terms from the specialized term DB 510, as shown in FIG. 4, and provides the display unit of the constructor terminal with them.

Thereafter, when the constructor determines that relationship extraction is possible, he/she selects the most suitable relationship from the group of candidate relationships and clicks the SAVE button.

The selection interface 320 of the manual processor unit 300 receives the constructor's selection and stores it in the constructor selection information DB 560 of the database unit 500.

A test collection constructed in the above-mentioned process of the constructor's making selections on the provided web page is stored as a text file in the test collection DB 520 of the database unit 500 in a format as given in Table 3 below.

**Table 3**

| Term1@Term2 | Relationship extraction | Term1 lacks specialty | Term2 lacks specialty | Passive voice | Negative | Sentence |
|---|---|---|---|---|---|---|
| blood_pressure_measurements@no_sig nificant_change | Relationship setting impossible | 0 | 1 | 0 | 0 | ... |
| ow_alloy_steel@di rect_reduced_iron | produce, make, create | 0 | 0 | 1 | 0 | ... |

While the present invention has been described in detail in connection with specific examples, it will be obvious to those skilled in the art that various changes are modifications are possible within the scope of the technical ideas of the present invention, and such changes and modifications belong to the accompanying claims.

### Industrial Applicability

The framework for semi-automatic construction of a test collection for extracting relationships between technical terms according to the present invention is advantageous in that a practical test collection is constructed using a large-scale academic database, a specialized term dictionary encompassing various areas, and a machine-learning algorithm, thereby automating stereotyped, time-consuming tasks and thus improving the work efficiency.

## Claims

1. A framework for semi-automatic construction of a test collection for extracting relationships between technical terms, comprising:
an automatic processor unit (200) adapted to systematically process syntactic and semantic characteristics of documents and generate triples comprising pairs of specialized terms and a group of relevant associative relationship candidates;
a manual processor unit (300) adapted to provide a constructor terminal with a group of candidate triples generated by the automatic processor unit (200) and enable reception of a triple finally selected from the provided candidate triples by a constructor through the constructor terminal;
a test collection construction unit (400) adapted to receive the triple selected by the manual processor unit (300), construct a test collection, and store the constructed test collection in a database unit (500); and
a central processing unit (100) adapted to control organic operations of the automatic processor unit (200), the manual processor unit (300), and the test collection construction unit (400).

2. The framework for semi-automatic construction of a test collection for extracting relationships between technical terms as claimed in claim 1, wherein the automatic processor unit (200) comprises:
a document analysis unit (210) adapted to perform tasks comprising syntactic analysis of documents, lexical category tagging, and phrase chunking;
a specialized term tagging unit (220) adapted to identify specialized terms existing in the documents using a specialized term dictionary stored in a specialized term DB (510) of the database unit (500);
a technical term recognition unit (230) adapted to identify technical terms having significant meanings in documents and extract and refine the technical terms;
an inter-technical term associative relationship recognition unit (240) adapted to grasp associative relationships between technical terms identified by the technical term recognition unit (230), recognize relationships held by pairs of terms using syntactic patterns of sentences, and extract descriptors describing associative relationships when the pairs of terms are considered capable of having associative relationships after pattern analysis;
an associative relationship conceptualization unit (250) adapted to generate various candidate associative relationships through semantic extension by abstracting concepts of descriptors, which are extracted by the inter-technical term associative relationship recognition unit (240), using a semantic network such as a WordNet DB (530) of the database unit (500) and by semantically clustering the abstracted concepts; and
a candidate triple generation unit (260) adapted to generate candidate triples using the technical terms and abstracted various associative relationships.

3. The framework for semi-automatic construction of a test collection for extracting relationships between technical terms as claimed in claim 1, wherein the manual processor unit (300) comprises:
a constructor selection interface (320) and a constructor management interface (330) configured as input and output paths of input signals used by the constructor to operate a system and output signals used to provide the constructor with results of the system in response to the input signals; and
a triple determination support tool (310) adapted to provide associative relationship's semantic information, context information, etc. for reference to support the constructor's determination of validity of a candidate triple set and final triple decision through the constructor selection interface (320) and the constructor management interface (330).

4. The framework for semi-automatic construction of a test collection for extracting relationships between technical terms as claimed in claim 2, wherein the associative relationship recognition unit (240) is adapted to receive an input signal regarding whether relationship extraction is possible or not from the constructor terminal based on the constructor's determination and extract an associative relationship between specialized terms as 'relationship setting impossible', 'relationship not found', or 'relationship extraction successful'.

5. The framework for semi-automatic construction of a test collection for extracting relationships between technical terms as claimed in claim 4, wherein the associative relationship recognition unit (240) is adapted to extract the associative relationship between specialized terms as 'relationship setting impossible' when the associative relationship with the two specialized terms does not constitute 'S+V+O' form and when at least one of the two specialized terms is not determined as a specialized term.

6. The framework for semi-automatic construction of a test collection for extracting relationships between technical terms as claimed in claim 4, wherein the associative relationship recognition unit (240) is adapted to extract the associative relationship between specialized terms as 'relationship not found' when the associative relationship with the two specialized terms constitutes 'S+V+O' form and when no suitable associative relationship is found among the candidate associative relationships.

7. The framework for semi-automatic construction of a test collection for extracting relationships between technical terms as claimed in claim 4, wherein the associative relationship recognition unit (240) is adapted to extract the associative relationship between specialized terms as 'relationship extraction successful' when the associative relationship with the two specialized terms constitutes 'S+V+O' form and when a suitable associative relationship can be assigned from the candidate associative relationships and to concurrently perform setting regarding whether affirmative or negative between the two terms and setting whether active or passive.

8. The framework for semi-automatic construction of a test collection for extracting relationships between technical terms as claimed in claim 1, wherein, when the manual processor unit (300) provides the constructor terminal with a triple comprising a pair of specialized terms and a group of relevant associative relationship candidates, sentences comprising specialized terms are provided together.

9. The framework for semi-automatic construction of a test collection for extracting relationships between technical terms as claimed in claim 1, wherein the manual processor unit (300) is adapted to provide Korean equivalents together so that the constructor can easily grasp meanings of specialized terms.

10. The framework for semi-automatic construction of a test collection for extracting relationships between technical terms as claimed in claim 1, wherein a test collection constructed by the test collection construction unit (400) comprises triple and associative relationship's semantic information, information regarding context in which triples appear (sentences from which triples are extracted), and triple's area information.
